# EUROPÄISCHE PATENTSCHRIFT

(11) **EP 1 696 167 B1**
(45) Veröffentlichungstag und Bekanntmachung des Hinweises auf die Patenterteilung: **23.04.2008**
(21) Anmeldenummer: 06003485.7
(22) Anmeldetag: 21.02.2006
(51) Int. Cl.: F16L 59/02, E04F 17/02

(54) **Als Fertigbauteil ausgebildetes Dämmstoffelement zur Aufnahme eines Schornsteinrohres oder dergleichen**
Prefabricated insulating element for the reception of a chimney pipe or the like
Elément isolant en forme préfabriquée pour la réception d'un tuyau de cheminée ou similaire

(30) Priorität: 25.02.2005 DE 102005008762
(43) Veröffentlichungstag der Anmeldung: 30.08.2006
(73) Patentinhaber: SAINT-GOBAIN ISOVER G+H AG, 67059 Ludwigshafen (DE)
(72) Erfinder: Bissinger, Claus, 67271 Kleinkarlbach (DE); Albrecht, Volker, 67360 Lingenfeld (DE)
(74) Vertreter: Bockhorni & Kollegen

(56) Entgegenhaltungen:
- DE-A1- 4 106 835
- FR-A- 2 588 595

## Beschreibung

Die Erfindung betrifft ein als Fertigbauteil ausgebildetes Dämmstoffelement gemäß dem Oberbegriff des Patentanspruches 1.

Ein solches Dämmstoffelement ist aus FR-2 588 595 bekannt.

Für die Durchführung von Schornsteinrohren aus Stahlblech, aber auch aus anderen Materialien, etwa Schamotte, durch Mauerwerk oder Gefache, wie Wänden, Geschossdecken und dergleichen können bereits bei der Gebäudeplanung Mauerwerksöffnungen vorgesehen werden, wobei unerheblich ist, ob es sich um einen Neubau, eine Sanierung oder dergleichen handelt. Der Querschnitt der Mauerwerksöffnung ist typischerweise größer dimensioniert als der Querschnitt des Schornsteinrohres. Falls eine Verlegung des Schornsteinrohres nicht sofort erforderlich ist, ergibt sich die Notwendigkeit die Mauerwerksöffnung zu verschließen. Die Wahl geeigneter Mittel bleibt meist dem Handwerker vor Ort überlassen. Vor allem ergibt sich der Nachteil, dass bei späterer Durchführung eines Schornsteinrohres der gesamte Mauerwerksöffnungsverschluss entfernt werden muss. Der Zwischenraum zwischen dem Außenumfang des Schornsteinrohres und der Mauerwerksöffnung wird dann üblicherweise mit Stopfwolle aus Mineralwolle gefüllt, um das Schornsteinrohr in der gewünschten Ausrichtung in der Mauerwerksöffnung zu fixieren und eine entsprechende Abdichtung herbeizuführen. Je nach Ausführung durch den Handwerker wird hierbei eine mehr oder weniger vollständige Füllung und damit ausreichende Dämmung erzielt. Als Gesamtnachteil dieses Vorgehens ergibt sich eine aufwändige und umständliche Vorgehensweise.

Aufgabe der Erfindung ist es, ein Dämmstoffelement bereit zu stellen, welches als Fertigteil ausgebildet in eine Mauerwerksöffnung eingesetzt werden kann und die Aufnahme eines Schornsteinrohres mit fixem Durchmesser, auch zu einem späteren Zeitpunkt, ermöglicht.

Diese Aufgabe wird erfindungsgemäß durch die im kennzeichnenden Teil des Anspruches 1 enthaltenen Merkmale gelöst, wobei zweckmäßige Weiterbildungen der Erfindung durch die in den Unteransprüchen enthaltenen Merkmale gekennzeichnet sind.

Nach Maßgabe der Erfindung ist innerhalb des Dämmstoffelementes ein Kernelement vorgesehen, das herausnehmbar oder heraustrennbar innerhalb des Dämmstoffelementes aufgenommen ist. Bei Herausnahme des Kernelementes wird eine Aufnahmeöffnung passend für ein Schornsteinrohr mit einem fixen Durchmesser geschaffen. Dadurch ist das Dämmstoffelement für das Verlegen von Schornsteinrohren mit einem fixen Durchmesser ausgelegt. Infolge der blockartigen Ausbildung des Dämmstoffelementes kann es mühelos in entsprechenden Mauerwerksdurchbrüchen verlegt werden. Die Beigabe von Stopfwolle ist damit nicht mehr erforderlich. Dadurch, dass das Dämmstoffelement als Fertigbauelement gewährleistet ist, werden gleichbleibende Bedingungen bezüglich Dämmfähigkeit und dergleichen über das gesamte Dämmstoffelement sichergestellt, d. h. die Eigenschaften des Dämmstoffelementes können vom Handwerker nicht mehr beeinflusst werden, wie es im Falle der manuell eingebrachten Stopfwolle gegeben ist. Zweckmäßigerweise ist das Kernelement mittig angeordnet, so dass auch die Aufnahmeöffnung für das Schornsteinrohr mittig ist. Damit kann in einfacher Weise sichergestellt werden, dass beispielsweise das Schornsteinrohr jeweils zentral innerhalb des Dämmstoffelementes angeordnet und somit auch innerhalb der geeignet aufbereiteten Mauerwerksöffnung exakt positioniert ist.

Zweckmäßigerweise füllt das Kernelement das Dämmstoffelement im Wesentlichen bis auf den minimal gehaltenen Trennschnitt vollständig aus. Wie bereits dargelegt ist es zweckmäßig, das Dämmstoffelement mit dem Kernelement zur Verfügung zu stellen, um das Dämmstoffelement in bereits vorgefertigten Mauerwerksdurchbrüchen für spätere Verwendungszwecke einsetzen zu können, um für eine ausreichende Wärmedämmung des Bauwerkes zu sorgen und um zu verhindern, dass Kältebrücken entstehen können. Bei Bedarf kann dann zu einem späteren Zeitpunkt das Schornsteinrohr über dieses Dämmstoffelement verlegt werden. Insbesondere in diesem Zusammenhang ist es zweckmäßig, entsprechende Stirnflächen des Dämmstoffelementes mit einer putzaffinen Trägerschicht zu beschichten, etwa mit Wasserglas. Die Beschichtung wird zweckmäßigerweise in die oberflächenseitige Grenzschicht eingetragen, etwa eingewalkt. Dadurch ergibt sich eine gute Haftung für einen Putzauftrag.

Zweckmäßigerweise werden die Dämmstoffelemente mit Aufnahmeöffnungen bereitgestellt, deren Durchmesser den Standarddurchmessern der Schornsteinrohre angepasst ist. Insbesondere weisen die Dämmstoffelemente Aufnahmeöffnungen mit einem Durchmesser von 130, 150 und 180 mm auf.

Im bevorzugten Ausführungsbeispiel ist die Aufnahmeöffnung kreisrund entsprechend der üblichen Bauweise der Schornsteinrohre, jedoch liegt es auch im Rahmen der Erfindung bei Bedarf die Aufnahmeöffnung entsprechend oval oder eckig auszuführen, wenn hierzu schornsteinrohrseitig entsprechende Vorgaben zu erfüllen sind, diese also mit einem unrunden Querschnitt vorliegen.

In zweckmäßiger Weise ist das Dämmelement als Monoblock ausgebildet, so dass das Kernelement aus dem Vollen herausgearbeitet wird und zwar beispielsweise durch Einbringen von Trennschnitten, wozu etwa eine dünne Bandsäge oder dergleichen verwendet werden kann. In diesem Zusammenhang kann es zweckmäßig sein, wenn der umfangsmäßige Trennschnitt zur Bildung des Kernelementes nicht vollständig über dem Umfang geführt wird, sondern mindestens eine vergleichsweise schmale trennschnittfreie Zone in Art eines Haltesteges verbleibt, so dass das Kernelement sozusagen transportgesichert gehalten wird. Es bedarf dann für den Gebrauch lediglich entsprechender kleiner Trennschnitte, die ohne weiteres vor Ort durch den Handwerker unter Zuhilfenahme etwa eines Messers vorgenommen werden können.

In einer weiteren besonders vorteilhaften Ausführungsform der Erfindung ist das Dämmstoffelement mittig und zwar in zwei Dämmstoffelementhälften bzw. Rohlingshälften geteilt, wobei das Kernelement in Form von zwei Kernelementhälften ausgebildet ist, welche jeweils in den Dämmstoffelementhälften aufgenommen bzw. angeordnet sind. Nach dem Zusammensetzen der beiden Dämmstoffelementhälften zum Dämmstoffelement ergänzen sich die Kernelementhälften zu dem Kernelement. Diese Ausführungsform zeichnet sich durch fertigungstechnische Vorteile aus.

Hierbei können die Kernelementhälften durch einen Haltesteg transportfixiert sein, wobei eine Anordnung des Haltestegs an der Berührfläche der beiden Rohlingshälften bevorzugt ist, indem der Trennschnitt bis auf eine gewünschte Stegbreite, d.h. in einem Öffnungswinkel < 180° realisiert ist. In diesem Zusammenhang kann es auch zweckmäßig sein, wenn im Bereich der trennschnittfreien Zone der zu führende Schnitt durch entsprechende Markierungslinien verdeutlicht wird. Hierbei können optische Markierungslinien verwendet werden, die sich beispielsweise in einfacher Weise durch Heißluftdüsen oder Farbauftrag erzeugen lassen.

Zweckmäßigerweise wird als Material Steinwolle für das Dämmstoffmaterial verwendet. Es eignet sich aber insbesondere auch Mineralwolle, die in einem physiologischen Milieu löslich ist. Eine geeignete Zusammensetzung hierfür ist wie folgt:

| | | | |
|---|---|---|---|
| SiO₂ | 39 - 55 % | vorzugsweise | 40 - 52 % |
| Al₂O₃ | 16 - 27 % | vorzugsweise | 16 - 26 % |
| CaO | 9,5 - 20 % | vorzugsweise | 10 - 18 % |
| MgO | 1 - 5 % | vorzugsweise | 1 - 4,9 % |
| Na₂O | 0 - 15 % | vorzugsweise | 2 - 12 % |
| K₂O | 0 - 15 % | vorzugsweise | 2 - 12 % |
| R₂O (Na₂O + K₂O) | 10 - 14,7 % | vorzugsweise | 10 - 13,5 % |
| P₂O₅ | 0 - 3 % | insbesondere | 0 - 2 % |
| Fe₂O₃ (Eisen gesamt) | 1,5 - 15 % | insbesondere | 3,2 - 8 % |
| B₂O₃ | 0 - 2 % | vorzugsweise | 0 - 1 % |
| TiO₂ | 0 - 2 % | vorzugsweise | 0,4 - 1 % |
| Sonstiges | 0 - 2,0 % | | |

In Zusammenhang mit Mineralwolle, die in physiologischem Milieu löslich ist, weist die Zusammensetzung der Mineralfasern ein Alkali/Erdalkali-Massenverhältnis < 1 auf und ist die Faserstruktur des Dämmelements bestimmt durch einen mittleren geometrischen Faserdurchmesser ≤4 µm.

Die Rohdichte der Dämmstoffelemente liegt zweckmäßigerweise im Bereich von 60 kg/m³ bis 140 kg/m³ und beträgt insbesondere ≥80 kg/m³.

Die Erfindung betrifft ferner ein System zur Dämmung von Schornsteinrohrdurchführungen durch Öffnungen oder Durchbrüche in Wänden, Decke oder sonstigem Mauerwerk oder Gefachen unter Anwendung eines blockartigen Dämmstoffelements zur Ausfüllung der Öffnungen oder Durchbrüche und zur Aufnahme eines Schornsteinrohres, wobei das Dämmstoffelement gemäß Merkmalen aus den Ansprüchen 1 bis 15 ausgebildet sein kann.

Neben der dämmenden Wirkung und der mechanischen Fixierung im Verbund mit den handhabungstechnischen Vorteilen ermöglicht das erfindungsgemäße Dämmelement zusätzlich eine schalltechnische Entkopplung des Schornsteinrohres von dem Rest des Gebäudes, indem insbesondere niederfrequente Vibrationen an der Ausbreitung in die an ein Dämmstoffelement angrenzenden Mauerwerk - oder Gefachteile gehindert sind, wobei das Dämmstoffelement gemäß Merkmalen aus den Ansprüchen 1 bis 15 ausgebildet sein kann

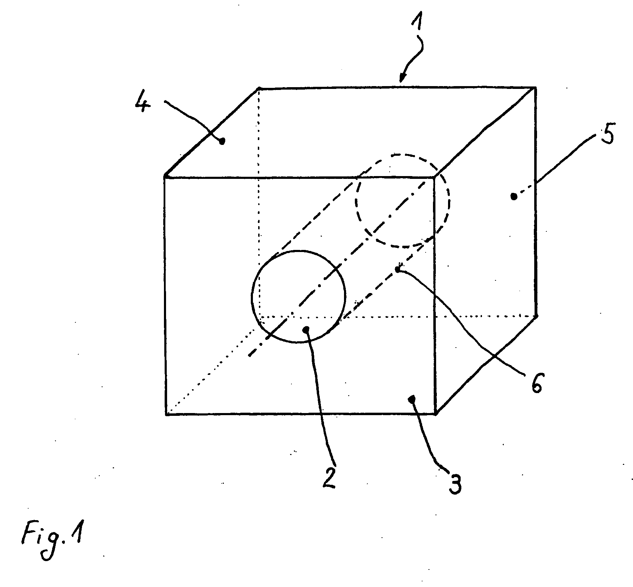

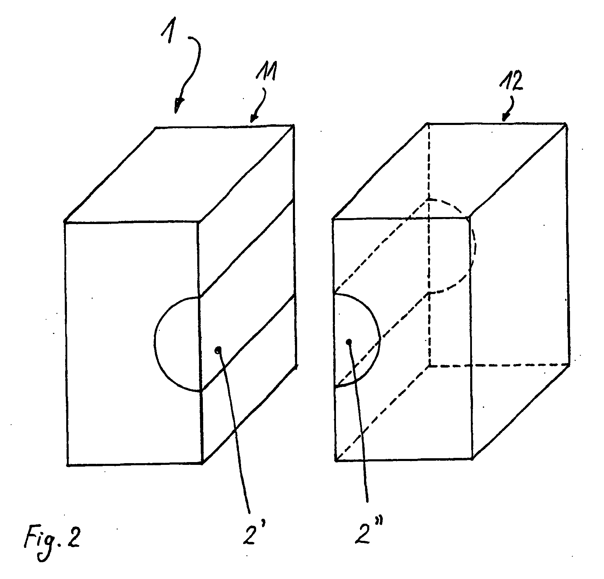

Nachfolgend werden beispielhaft zwei bevorzugte Ausführungsbeispiele der Erfindung anhand der Figuren 1 und 2 beschrieben, welche perspektivische Ansichten verschiedener Ausführungsbeispiele des Dämmstoffelements zeigen.

In der Figur ist mit 1 ein blockartig ausgebildetes Dämmstoffelement dargestellt, welches im dargestellten Ausführungsbeispiel als Quader mit Rechteckquerschnitt und zwar beispielshalber mit einer Länge und Breite von 600 mm und einer Tiefe von 240 mm ausgelegt ist. Dieses Dämmstoffelement 1 dient zur Aufnahme eines Schornsteinrohres mit fixem Durchmesser, welches in einer Öffnung eines Mauerwerks oder Gefaches, insbesondere einer Wand, Geschoßdecke oder Boden anzuordnen ist. Üblicherweise sind derartige Schornsteinrohre aus Blech gebildet.

Hierzu ist das Dämmstoffelement 1 mit einem im Inneren ausgebildeten Kernelement 2 ausgebildet. Dieses Kernelement 2 ist innerhalb des Dämmstoffelementes 1 angeordnet und erstreckt sich, wie strichliert dargestellt ist, von der vorderen Hauptfläche 3 durchgehend bis zur hinteren Hauptfläche 5 bzw. Rückseite 5. Im dargestellten Ausführungsbeispiel bildet das Kernelement 2 somit einen zylinderförmigen Körper, der sich von der vorderen Hauptfläche 3 bis zur hinteren Hauptfläche 5 durchgehend erstreckt und einen kreisförmigen Querschnitt aufweist, genauer gesagt, ist das Kernelement 2 als Vollzylinder mit typischerweise kreisrundem Querschnitt ausgebildet.

Erzeugt wird der Zylinder durch einen Trennschnitt aus dem vollen Material des quaderförmigen Dämmstoffelementes 1 und zwar durch beispielsweise eine Bandsäge. Diese wird beispielsweise von der oberen Hauptfläche 4 her eingeführt, wobei sich der Schnitt von dort bis zum Material des vollzylindrischen Kernelementes 2 erstreckt. Von hier aus wird der Trennschnitt über den Umfang geführt, womit das vollzylindrische Kernelement 2 durch Materialtrennung gebildet wird. Es versteht sich von selbst, dass die Schnitte materialschonend und mit möglichst minimalem Trennspalt geführt werden.

Wie bereits oben beschrieben, ist es bei Bedarf möglich, den umfangsmäßigen Trennschnitt zur Herausarbeitung des Kernelementes 2 nicht über den gesamten Umfang zu führen, so dass ein stegartiger Abschnitt trennschnittfrei bleibt. In der Praxis besitzen diese trennschnittfreien Haltestege nur Haltefunktion und erstrecken sich umfangsmäßig nur über eine Länge von etwa 10 bis 20 mm. Durch diese Haltestege haftet das im Übrigen voll ausgetrennte Kernelement 2 zur Sicherung auf dem Transportweg im Dämmstoffelement 1 und kann also beim Transport nicht herausfallen.

Bei Verwendung eines geeigneten Verfahrens zur Herstellung nicht axial durchgehender Trennschnitte, etwa durch Verwendung einer Lochkreissäge, die von den Großflächen 3 und/oder 5 herausgearbeitet sind, kann ein vollumfänglicher Haltesteg, zweckmäßigerweise axial mittig im Dämmelement angeordnet, mit geringer axialer Erstreckung realisiert werden. Bei dieser Ausführung wird vorteilhaft eine durchgängige Fugenbildung verhindert.

Ersichtlich begrenzt das Kernelement 2 eine Aufnahmeöffnung 6 innerhalb des Dämmstoffelementes, wobei die Außenkontur des Kernelementes der Innenkontur des Dämmstoffelementes entspricht.

Vorzugsweise kann aber der Trennschnitt über den gesamten Umfang des Kernelementes vorgenommen werden, so dass das Kernelement herausnehmbar im Dämmstoffelement sitzt. Da der Trennschnitt mit einem sehr dünnen Bandsägeblatt vorgenommen wird, welches nur wenig Material herausarbeitet, verbleibt nur eine minimale Trennspalte, die zweckmäßigerweise eine Größe < 1 mm betragen kann.

Das in der Figur 1 dargestellte Dämmstoffelement 1 ist ein Fertigbauteil in Monoblockbauweise, dessen Kernelement mit nur einem Trennschnitt von der Hauptfläche 6 her hergestellt sein kann. Ersichtlich kann das Dämmstoffelement 1 als Block in eine entsprechende Mauerdurchbruchsöffnung eingesetzt werden, ohne dass ein Zustopfen mit Stopfwolle erforderlich wäre.

In einer weiteren Ausführungsform nach Figur 2 ist das Dämmstoffelement aus zwei separaten Kernelementhälften bzw. Rohlingshälften 11 und 12 aufgebaut, die nahezu identisch ausgebildet sind und zusammengesetzt das Dämmstoffelement 1 bilden. Auch dieses Dämmstoffelement 1 weist ein Kernelement 2 auf, welches jedoch aus zwei Kernelementhälften 2' und 2" zusammengesetzt ist. Die Kernelementhälften 2' und 2" sind jeweils in den korrespondierenden Rohlingshälften 11 bzw. 12 angeordnet bzw. ausgebildet. Diese Ausführungsform hat fertigungstechnische Vorteile, da sich infolge der geteilten Ausführung des Dämmstoffelements in zwei Dämmstoffelementhälften das Kernelement leichter herausarbeiten lässt, was wiederum durch entsprechende Schnittführung erfolgt. Für den Transport ist es möglich, die beiden Dämmstoffhälften durch ein Folienband oder dgl. zum blockartigen Dämmstoffelement zusammen zu fühen. Zusätzlich kann bei Bedarf auch eine Transportsicherung dadurch erfolgen, dass in gleicher Weise wie bei der Ausführungsform nach Figur 1 entsprechende Haltestege im Trennschnittbereich der Kernelementhälften verbleiben, so etwa an der Grenzfläche der beiden Rohlingshälften, an der sie zusammengesetzt werden. Für die Montage des Schornsteinrohres lässt sich das entsprechende Kernelement leicht herausnehmen und nach Zusammensetzen der beiden Rohlingshälften kann das Dämmstoffelement in einfacher Weise in einem Mauerdurchbruch montiert werden.

Ferner sind die dargestellten Ausführungsbeispiele des Dämmstoffelementes auf eine Tiefe von 240 mm ausgelegt, so dass es in Wänden mit üblichen Dicken verlegt werden kann. Selbstverständlich ist die Erfindung auf diese Tiefe nicht festgelegt, vielmehr kann das Dämmstoffelement auch mit anderen Abmessungen in Bezug auf Tiefe, Länge und Breite hergestellt sein. Sollen größere Mauerdicken überbrückt werden, können auch mehrere Dämmstoffelemente hintereinander in eine Durchbruchsöffnung modulartig eingesetzt werden.

Als Material für das Dämmstoffelement 1, welches hitzebeständig sein soll, eignet sich Steinwolle. Insbesondere ist aber auch hitzebeständige Mineralwolle mit biolöslichen Eigenschaften zweckmäßig. Die in den Figuren dargestellten Ausführungsbeispiele des Dämmstoffelementes weisen eine Rohdichte von 100 kg/m³ auf und der Bindemittelanteil (trocken) beträgt 2,5 %. Ein derartiges Dämmstoffelement erfüllt somit auch die Bedingungen der Brandschutzklasse F90 (gemäß DIN-Norm).

## Patentansprüche

1. Als Fertigbauteil ausgebildetes Dämmstoffelement (1) aus hitzebeständigem Material, insbesondere Mineralwolle, mit einer längs einer geradlinigen Achse durch das Dämmstoffelement (1) hindurchgehenden Aufnahmeöffnung für die Aufnahme eines Schornsteinrohres oder dergleichen, wobei das Dämmstoffelement als Einsetzteil in eine Wand- oder Deckenöffnung oder einem sonstigen Mauerwerk- oder Gefachdurchbruchs ausgebildet ist,
**dadurch gekennzeichnet, dass**
das blockartig ausgebildete Dämmstoffelement (1) mit einem Kernelement (2) versehen ist, welches herausnehmbar oder heraustrennbar innerhalb des Dämmstoffelementes (1) angeordnet ist und das mit seiner Außenkontur eine Aufnahmeöffnung (6) des Dämmstoffelements (1) mit vorbestimmtem Querschnitt begrenzt.

2. Dämmstoffelement nach Anspruch 1
**dadurch gekennzeichnet, dass**
die durch das Kernelement (2) begrenzte Aufnahmeöffnung (6) bezogen auf die vordere (3) und hintere Hauptfläche (5) des Dämmstoffelements (1) mittig angeordnet ist.

3. Dämmstoffelement nach Anspruch 1 oder 2,
**dadurch gekennzeichnet, dass**
das Kernelement (2) so ausgebildet ist, dass es das Dämmstoffelement (1) im Wesentlichen vollständig füllt.

4. Dämmstoffelement nach einem der vorhergehenden Ansprüche
**dadurch gekennzeichnet, dass**
der Öffnungsquerschnitt der Aufnahmeöffnung (6) kreisrund und das Kernelement (2) mit entsprechender kreisrunder Außenkontur und bevorzugt als Vollzylinder gebildet ist.

5. Dämmstoffelement nach einem der vorhergehenden Ansprüche
**dadurch gekennzeichnet, dass**
die Aufnahmeöffnung (6) einen Durchmesser von 130, 150 oder 180 mm aufweist.

6. Dämmstoffelement nach einem der vorhergehenden Ansprüche,
**dadurch gekennzeichnet, dass**
das Kernelement (2) durch einen Trennschnitt gegenüber dem Dämmstoffelement (1) getrennt ist.

7. Dämmstoffelement nach einem der vorhergehenden Ansprüche,
**dadurch gekennzeichnet, dass**
der Trennschnitt durch Sägen oder Schneiden eingebracht ist.

8. Dämmstoffelement nach einem der vorhergehenden Ansprüche,
**dadurch gekennzeichnet, dass**
das Kernelement (2) zentral im Dämmstoffelement (1) ausgebildet ist.

9. Dämmstoffelement nach einem der vorhergehenden Ansprüche,
**dadurch gekennzeichnet, dass**
das Dämmstoffelement (1) aus Steinwolle gebildet ist.

10. Dämmstoffelement nach einem der vorhergehenden Ansprüche,
**dadurch gekennzeichnet, dass**
dieses aus in einem physiologischen Milieu löslichen Mineralfasern mit folgender chemischer Zusammensetzung in Gew.-% gebildet ist:
| | | | | | |
|---|---|---|---|---|---|
| SiO₂ | 39 - 55 | % | vorzugsweise | 40 - 52 | % |
| Al₂O₃ | 16 - 27 | % | vorzugsweise | 16 - 26 | % |
| CaO | 9,5 - 20 | % | vorzugsweise | 10 - 18 | % |
| MgO | 1 - 5 | % | vorzugsweise | 1 - 4,9 | % |
| Na₂O | 0 - 15 | % | vorzugsweise | 2 - 12 | % |
| K₂O | 0 - 15 | % | vorzugsweise | 2 - 12 | % |
| R₂O (Na₂O + K₂O) | 10 - 14,7 | % | vorzugsweise | 10 -13,5 | % |
| P₂O₅ | 0 - 3 | % | insbesondere | 0 - 2 | % |
| Fe₂O₃ (Eisen gesamt) | 1,5 - 15 | % | insbesondere | 3,2 - 8 | % |
| B₂O₃ | 0 - 2 | % | vorzugsweise | 0 - 1 | % |
| TiO₂ | 0 - 2 | % | vorzugsweise | 0,4 - 1 | % |
| Sonstiges | 0 - 2,0 | % | | | |

11. Dämmstoffelement nach einem der vorhergehenden Ansprüche,
**dadurch gekennzeichnet, dass**
die Rohdichte des Dämmstoffelementes (1) einschließlich des Kernelementes (2) im Bereich von 60 bis 140 kg/m³ liegt, vorzugsweise ≥80 kg/m³ ist.

12. Dämmstoffelement nach einem der vorhergehenden Ansprüche,
**dadurch gekennzeichnet, dass**
der Bindemittelgehalt (trocken) < 3,5 %, vorzugsweise < 2,5 % ist.

13. Dämmstoffelement nach einem der vorhergehenden Ansprüche,
**dadurch gekennzeichnet, dass**
das Dämmstoffelement (1) als quaderförmiger Block ausgebildet ist.

14. Dämmstoffelement nach einem der vorhergehenden Ansprüche,
**dadurch gekennzeichnet, dass**
die vordere und hintere Hauptfläche (3, 4) des Dämmstoffelementes (1) mit einer putzaffinen Trägerschicht versehen ist.

15. Dämmstoffelement nach einem der vorhergehenden Ansprüche,
**dadurch gekennzeichnet, dass**
das Dämmstoffelement (1) aus zwei Dämmstoffelementhälften (11, 12) aufgebaut ist, in denen das Kernelement (2) jeweils aus zwei Kernelementhälften (2', 2") gebildet ist.

16. System zur Dämmung von Schornsteinrohrdurchführungen durch Öffnungen oder Durchbrüche in Wänden, Decken oder sonstigem Mauerwerk oder Gefachen, mit einem blockartigen Dämmstoffelement (1) gemäß einem der vorhergehenden Ansprüche.

## Claims

1. Prefabricated insulating element (1) made of a heat-resistant material, in particular mineral wool, having a receiving opening, which passes through the insulating element (1) along a rectilinear axis, for receiving a chimney pipe or the like, the insulating element being configured as a part to be inserted in a wall or ceiling opening or in some other masonry or framed wall opening,
**characterised in that**
the insulating element (1) which has a block-like configuration is provided with a core element (2) which is disposed within the insulating element (1) so as to be removable or separable and which, with its outer contour, delimits a receiving opening (6) of the insulating element (1) with a predetermined cross-section.

2. Insulating element according to claim 1,
**characterised in that**
the receiving opening (6) which is delimited by the core element (2) is disposed centrally relative to the front (3) and rear main surface (5) of the insulating element (1) .

3. Insulating element according to claim 1 or 2,
**characterised in that**
the core element (2) is configured such that it essentially completely fills the insulating element (1).

4. Insulating element according to one of the preceding claims,
**characterised in that**
the opening cross-section of the receiving opening (6) is circular and the core element (2) is formed with a corresponding circular outer contour and preferably as a full cylinder.

5. Insulating element according to one of the preceding claims,
**characterised in that**
the receiving opening (6) has a diameter of 130, 150 or 180 mm.

6. Insulating element according to one of the preceding claims,
**characterised in that**
the core element (2) is separated by a parting cut relative to the insulating element (1).

7. Insulating element according to one of the preceding claims,
**characterised in that**
the parting cut is introduced by sawing or cutting.

8. Insulating element according to one of the preceding claims,
**characterised in that**
the core element (2) is configured centrally in the insulating element (1).

9. Insulating element according to one of the preceding claims,
**characterised in that**
the insulating element (1) is formed from rock wool.

10. Insulating element according to one of the preceding claims,
**characterised in that**
the latter is formed from mineral fibres which are soluble in a physiological medium with the following chemical composition in % by weight:
| | | | |
|---|---|---|---|
| SiO₂ | 39 - 55% | preferably | 40 - 52% |
| Al₂O₃ | 16 - 27% | preferably | 16 - 26% |
| CaO | 9.5 - 20% | preferably | 10 - 18% |
| MgO | 1 - 5% | preferably | 1 - 4.9% |
| Na₂O | 0 - 15% | preferably | 2 - 12% |
| K₂O | 0 - 15% | preferably | 2 - 12% |
| R₂O(Na₂O + K₂O) | 10 - 14.7% | preferably | 10 - 13.5% |
| P₂O₅ | 0 - 3% | particularly | 0 - 2% |
| Fe₂O₃ (Total iron) | 1.5 - 15% | particularly | 3.2 - 8% |
| B₂O₃ | 0 - 2% | preferably | 0 - 1% |
| TiO₂ | 0 - 2% | preferably | 0.4 - 1% |
| Other | 0 - 2.0% | | |

11. Insulating element according to one of the preceding claims,
**characterised in that**
the bulk density of the insulating element (1) including the core element (2) is in the range of 60 - 140 kg/m³, preferably ≥ 80 kg/m³.

12. Insulating element according to one of the preceding claims,
**characterised in that**
the binder content (dry) is < 3.5%, preferably < 2.5%.

13. Insulating element according to one of the preceding claims,
**characterised in that**
the insulating element (1) is configured as a cuboid block.

14. Insulating element according to one of the preceding claims,
**characterised in that**
the front and rear main surface (3, 4) of the insulating element (1) is provided with a plaster-compatible carrier layer.

15. Insulating element according to one of the preceding claims,
**characterised in that**
the insulating element (1) is constructed from two insulating element halves (11, 12) in which the core element (2) is formed respectively from two core element halves (2', 2'').

16. System for insulating chimney pipe leadthroughs by means of openings or breakthroughs in walls, ceilings or some other masonry or framed walls, having a block-like insulating element (1) according to one of the preceding claims.

## Revendications

1. Élément isolant (1) conçu sous forme d'élément préfabriqué à partir d'un matériau résistant à la chaleur, en particulier de laine minérale, comprenant une ouverture de réception traversant l'élément isolant (1) le long d'un axe linéaire, destinée à réceptionner un tuyau de cheminée ou analogue, dans lequel l'élément isolant est conçu sous forme d'élément d'insertion dans une ouverture de mur ou de plafond ou d'une autre ouverture de maçonnerie ou de colombage,
**caractérisé en ce que**
l'élément isolant (1) conçu sous forme de bloc est pourvu d'un élément central (2), lequel est disposé à l'intérieur de l'élément isolant (1) de manière à pouvoir être retiré ou détaché et délimite, avec son contour externe, une ouverture de réception (6) de l'élément isolant (1) ayant une coupe transversale prédéfinie.

2. Élément isolant selon la revendication 1,
**caractérisé en ce que**
l'ouverture de réception (6) délimitée par l'élément central (2) est disposée de manière centrale par rapport aux surfaces principales avant (3) et arrière (5) de l'élément isolant (1).

3. Élément isolant selon la revendication 1 ou 2,
**caractérisé en ce que**
l'élément central (2) est conçu de telle sorte qu'il remplit presque entièrement l'élément isolant (1).

4. Élément isolant selon l'une quelconque des revendications précédentes,
**caractérisé en ce que**
la section de passage de l'ouverture de réception (6) est formée de manière circulaire et l'élément central (2) est formé avec un contour externe circulaire correspondant et de préférence sous forme de cylindre plein.

5. Élément isolant selon l'une quelconque des revendications précédentes,
**caractérisé en ce que**
l'ouverture de réception (6) présente un diamètre de 130, 150 ou 180 mm.

6. Élément isolant selon l'une quelconque des revendications précédentes,
**caractérisé en ce que**
l'élément central (2) est séparé de l'élément isolant (1) par une coupure.

7. Élément isolant selon l'une quelconque des revendications précédentes,
**caractérisé en ce que**
la coupure est réalisée à l'aide de scies ou de lames.

8. Élément isolant selon l'une quelconque des revendications précédentes,
**caractérisé en ce que**
l'élément central (2) est placé de manière centrale dans l'élément isolant (1).

9. Élément isolant selon l'une quelconque des revendications précédentes,
**caractérisé en ce que**
l'élément isolant (1) est fait de laine de roche.

10. Élément isolant selon l'une quelconque des revendications précédentes,
**caractérisé en ce que**
celui-ci est fait de fibres minérales solubles dans un milieu physiologique ayant la composition chimique suivante en pourcentage en poids :
| | | | |
|---|---|---|---|
| SiO₂ | 39% à 55% | de préférence | 40% à 52% |
| Al₂O₃ | 16% à 27% | de préférence | 16% à 26% |
| CaO | 9,5% à 20% | de préférence | 10% à 18% |
| MgO | 1% à 5% | de préférence | 1% à 4,9% |
| Na₂O | 0% à 15% | de préférence | 2% à 12% |
| K₂O | 0% à 15% | de préférence | 2% à 12% |
| R₂O (Na₂O + K₂O) | 10% à 14,7% | de préférence | 10% à 13,5% |
| P₂O₅ | 0% à 3% | en particulier | 0% à 2% |
| Fe₂O₃ (fer total) | 1,5% à 15% | en particulier | 3,2% à 8% |
| B₂O₃ | 0% à 2% | de préférence | 0% à 1% |
| TiO₂ | 0% à 2% | de préférence | 0,4% à 1% |
| Autre | 0% à 2,0% | | |

11. Élément isolant selon l'une quelconque des revendications précédentes,
**caractérisé en ce que**
la densité apparente de l'élément isolant (1), élément central (2) compris, se situe dans la gamme de 60 à 140 kg/m³, en étant de préférence ≥ 80 kg/m³.

12. Élément isolant selon l'une quelconque des revendications précédentes,
**caractérisé en ce que**
la teneur en liant (à sec) est < 3,5%, de préférence < 2,5%.

13. Élément isolant selon l'une quelconque des revendications précédentes,
**caractérisé en ce que**
l'élément isolant (1) est conçu sous forme de bloc rectangulaire.

14. Élément isolant selon l'une quelconque des revendications précédentes,
**caractérisé en ce que**
les surfaces principales avant et arrière (3, 4) de l'élément isolant (1) sont pourvues d'un couche support ayant une affinité pour le crépi.

15. Élément isolant selon l'une quelconque des revendications précédentes,
**caractérisé en ce que**
l'élément isolant (1) est composé de deux moitiés d'élément isolant (11, 12), dans lesquelles l'élément central (2) est formé par deux moitiés d'élément central (2', 2").

16. Système pour isoler des passages de tuyaux de cheminées à l'aide d'ouvertures ou d'ouvertures dans des murs, des plafonds ou autres ouvrages de maçonnerie ou colombages, comprenant un élément isolant sous forme de bloc (1) selon l'une quelconque des revendications précédentes.
